Europäisches Patentamt

(19) European Patent Office

Office européen des brevets

(11) Numéro de publication : **0 159 244**
**B1**

(12) ## FASCICULE DE BREVET EUROPÉEN

(45) Date de publication du fascicule du brevet :
**30.11.88**

(51) Int. Cl.⁴ : **G 01 N 27/70**

(21) Numéro de dépôt : **85400570.9**

(22) Date de dépôt : **25.03.85**

(54) Détecteur électrique de particules pour la détection d'incendie.

(30) Priorité : **26.03.84 FR 8404645**

(43) Date de publication de la demande :
**23.10.85 Bulletin 85/43**

(45) Mention de la délivrance du brevet :
**30.11.88 Bulletin 88/48**

(84) Etats contractants désignés :
**AT BE CH DE FR GB IT LI LU NL SE**

(56) Documents cités :
**DE-A- 1 498 657**
**DE-A- 2 048 817**
**FR-A- 2 424 532**
**GB-A- 1 199 072**
**PATENTS ABSTRACTS OF JAPAN, vol. 6, no. 192 (P-145)[1070], 30 septembre 1982; & JP - A - 57 103 047 (RIKAGAKU KENKYUSHO) 26-06-1982**

(73) Titulaire : **P.G.E.P. PROFESSIONAL GENERAL ELEC-TRONIC PRODUCTS Société Anonyme**
**130 rue Jean-Pierre Timbaud**
**F-92400 Courbevoie (FR)**

(72) Inventeur : **Roos, André**
**Hotel du Bon Accueil Chauffour**
**F-78270 Bonnieres (FR)**
Inventeur : **Dutertre-Ladurée, Daniel**
**Rue André Mojard**
**Cravent F-78270 Bonnieres/Seine (FR)**
Inventeur : **Goldman, Max Laboratoire de Physique des Décharges Groupe de Recherche No. 114 du CNRS**
**Plateau du Moulon F-91190 Gif-Sur-Yvette (FR)**
Inventeur : **Goldman, Alice Laboratoire de Physique des Décharges Groupe de Recherche No. 114 du CNRS**
**Plateau du Moulon F-91190 Gif-Sur-Yvette (FR)**

(74) Mandataire : **Laget, Jean-Loup et al**
**Cabinet Pierre Loyer 77, rue Boissière**
**F-75116 Paris (FR)**

## Description

L'invention concerne un détecteur électrique de particules pour la surveillance de l'atmosphère d'un local par exemple, notamment pour la détection des incendies.

Le problème de la détection d'incendie par la détection d'ions est bien connu. Usuellement, on provoque l'ionisation de l'air d'une chambre au moyen d'une source radioactive ou d'une étincelle électrique périodique, et on mesure, à l'état de veille, un courant ionique. Lorsqu'un feu se déclare, des particules lourdes de fumée par exemple, sont véhiculées dans le local jusqu'à la chambre de détection où elles perturbent la circulation des ions en les captant ou en les bloquant. Le courant ionique mesuré diminue alors et on utilise cette diminution pour déclencher une alarme. Il faut remarquer que l'humidité diminue également le courant ionique. Pour éviter que cette humidité ne déclenche de fausses alarmes, il est usuel de disposer une chambre de référence à l'abri de l'humidité, ou bien de procéder à une compensation électronique de la sensibilité du détecteur. Dans ce cas, il devient très difficile de détecter un feu couvant, par exemple. En effet, avec ces feux sans gros dégagement de chaleur, les courants de convection ne sont pas assez forts pour transporter des particules lourdes au détecteur en un temps raisonnable. En conséquence, le temps de réponse des détecteurs à un feu couvant est très long, ce qui constitue un inconvénient pour le respect des règles de sécurité.

Il est connu par le document DE-A-1.498.657 de mesurer la pureté d'un gaz ou les proportions d'un mélange gazeux, au moyen d'un circuit travaillant en courant alternatif dans lequel on mesure des impulsions de haute fréquence et de faible amplitude. Mais les courants utilisés sont d'environ 100 microampères, ce qui correspond à une consommation sensible.

Le document JP-A 57-103 047 décrit un détecteur de concentration de gaz utilisant une décharge électrique commandée, dans un tube cylindrique. Le circuit de ce détecteur doit comprendre un suppresseur pour interrompre la décharge.

L'un des buts de la présente invention est de réaliser un détecteur dans lequel contrairement aux détecteurs connus, la présence de particules, émises par un début d'incendie, par exemple, augmente le courant traversant le détecteur.

Un autre but de l'invention est de procurer un détecteur de particules chargées remarquablement simple et pouvant fonctionner sous différents types d'alimentations, avec une consommation extrêmement faible.

L'invention a pour objet un détecteur électrique de particules, du type dans lequel un capteur à deux électrodes est alimenté en tension, et fonctionne en courant en dessous de la zone de décharge couronne, caractérisé en ce que les électrodes sont constituées par des fils repliés en alpha, et en ce que le point de fonctionnement du capteur se situe en dessous de la zone de décharge non entretenue, c'est-à-dire bien en dessous, en intensité, de la zone de l'avalanche auto-entretenue correspondant à la décharge couronne, de telle sorte que la capture d'ions par ledit capteur provoque une augmentation du courant qui le traverse.

Selon d'autres caractéristiques de l'invention :
- les deux électrodes du capteur sont reliées à l'alimentation par l'intermédiaire de deux résistances, dont l'une est de l'ordre du gigohm, et dont l'autre crée une chute de tension mesurée pour déterminer le courant traversant le capteur ;
- le capteur est alimenté par l'intermédiaire d'au moins une diode qui fonctionne en début de caractéristique et se comporte comme une résistance ;
- ladite autre résistance a ses deux extrémités reliées à la masse par l'intermédiaire de capacités ;
- les fils constituant les électrodes en alpha présentent des barbes.

A titre d'exemple, on a représenté au dessin annexé :

Figure 1, un schéma électrique simplifié d'un mode de réalisation du détecteur de particules chargées selon l'invention ;

Figures 2 à 11, divers modes de réalisation des électrodes du détecteur de la figure 1 ;

Figure 12, une variante de réalisation du schéma électrique de la figure 1 ;

Figure 13, une vue agrandie d'une électrode en alpha selon la figure 5.

En se reportant au dessin, on peut voir un capteur 1 des particules chargées, qui constitue la partie sensible du détecteur. Le boîtier de ce capteur n'est pas représenté. Ce boîtier doit être ouvert aux gaz susceptibles de le traverser et comporte de préférence une grille laissant passer les gaz et les particules chargées émises par un début d'incendie. Les électrodes 2 et 3 du capteur 1 feront l'objet d'une description ultérieure.

Le capteur 1 est relié à la masse par une résistance 4 dont la valeur est par exemple de l'ordre de 10 mégohms.

Entre le capteur 1 et la résistance 4 est prévu un premier point de mesure 5. Le capteur 1 est relié à une source d'alimentation par l'intermédiaire d'une résistance série 6 de très grande valeur, de l'ordre de 1 gigohm. La source d'alimentation est symbolisée par le point 7. Elle est découplée de la masse par une capacité 8.

L'alimentation du circuit est schématisée par un transformateur élévateur de tension dont le primaire 12 est alimenté entre les bornes 13, 14 et dont le secondaire 15 est branché entre, d'une part la masse, et d'autre part le point 7 par l'intermédiaire d'une diode 16.

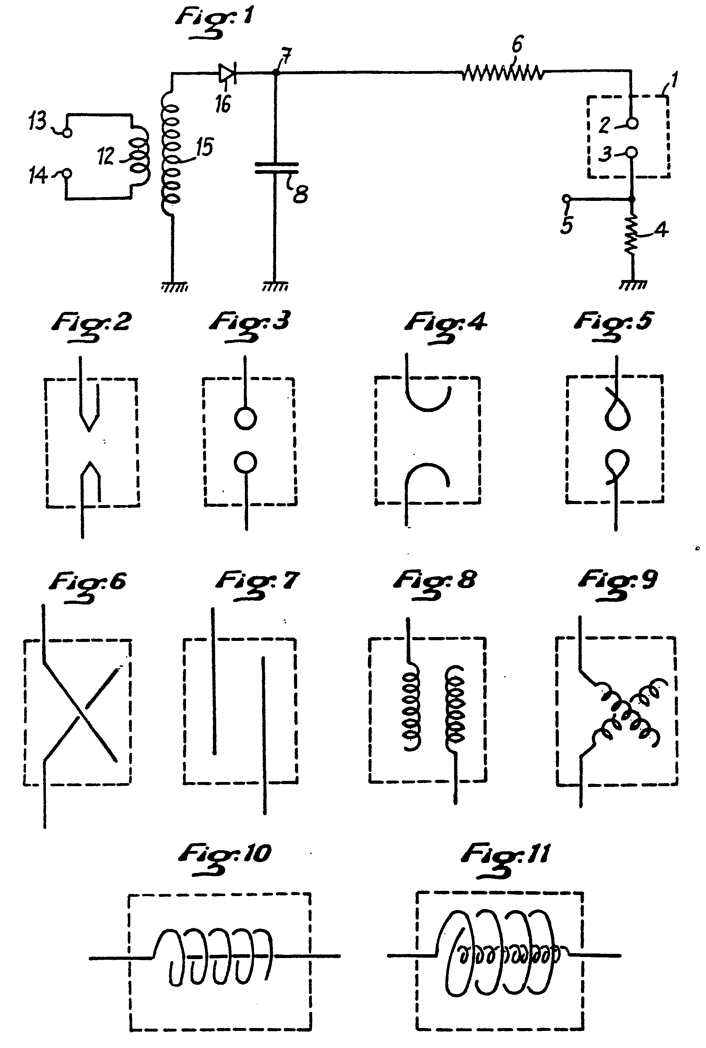

Il faut préciser que l'alimentation du circuit peut être continue, au point 7, avec une tension de l'ordre de 1.000 V par exemple ; qu'elle peut être redressée, selon le schéma de la figure 1, le primaire étant alimenté en alternatif ; et enfin qu'elle peut être impulsionnelle, toujours dans le cas de la figure 1, le primaire étant alors alimenté par des impulsions provenant par exemple de la décharge d'un condensateur.

Compte tenu de la valeur de la résistance 6, et de la valeur de la tension d'alimentation, le courant susceptible de traverser le capteur 1 est de l'ordre de $10^{-9}$ à $10^{-12}$ A. Le point de fonctionnement du capteur doit se situer en dessous de la zone de décharge non entretenue, c'est-à-dire bien en dessous, en intensité, de la zone de l'avalanche auto-entretenue correspondant à l'effet couronne.

Sur la figure 12, on peut voir que la résistance 6 de la figure 1 a été remplacée par des diodes 17 qui fonctionnent en début de caractéristique et se comportent comme une résistance de forte valeur. Cette disposition a un effet régulateur de courant pour augmenter la tension sur le capteur en fonction du vieillissement. La capacité 8 de la figure 1 a également été supprimée. En revanche, le point de mesure 5 est renvoyé après la résistance 4 de forte valeur, dont les deux extrémités sont reliées à la masse par l'intermédiaire de deux capacités 18 et 19 de très faible valeur. On obtient ainsi une sortie en courant intégré, de l'ordre de $10^{-11}$ A.

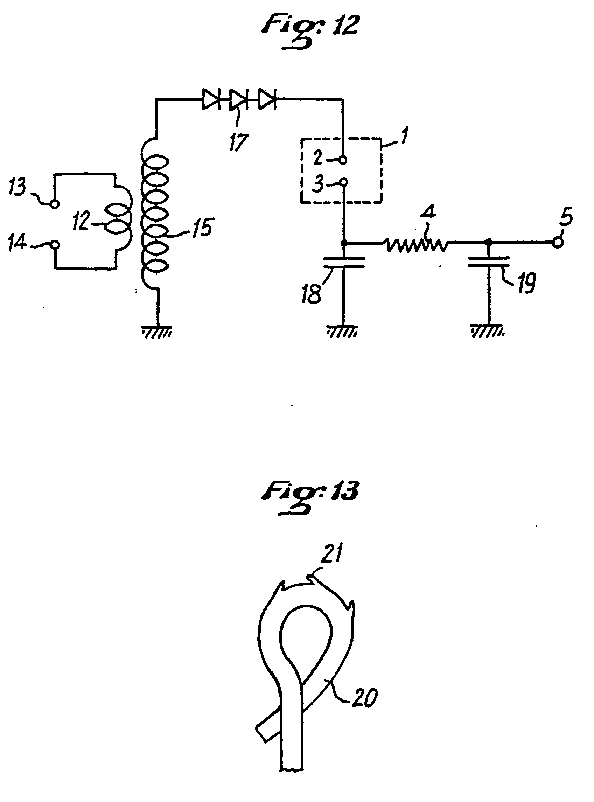

La forme des électrodes 2, 3 est prévue pour limiter le champ électrique entre elles, de façon à éviter les décharges. C'est pourquoi les électrodes ne sont pas constituées par des pointes en regard l'une de l'autre, mais plutôt par des doigts (figure 2), des boules (figure 3), des fils repliés en demi-cercle (figure 4) ou en alpha (figure 5), ou bien encore des fils droits disposés dans des plans parallèles (figure 6) la projection de l'un des fils sur le plan de l'autre fil coupant ce dernier, des fils parallèles (figure 7), des fils en hélice disposés parallèlement (figure 8) ou dans des plans parallèles (figure 9). On peut encore avoir l'une des électrodes en forme de bobine répartie sur un cylindre et l'autre électrode disposée dans l'axe du cylindre, soit droite (figure 10), soit en hélice (figure 11). Ces modes de réalisation des électrodes ne sont décrits qu'à titre d'illustration.

De préférence, les électrodes sont en fil replié par exemple en alpha, selon le schéma de la figure 5.

Sur la figure 13, l'électrode en alpha est représentée sous la forme d'un fil plié 20. Ce fil n'est pas parfait et il porte des barbes symbolisées en 21, car la microgéométrie du fil est utile pour des questions de champ électrique. A titre d'exemple, un fil d'un diamètre de 100 μm et plié avec un rayon de courbure inférieur ou égal à 1 mm.

Cette forme d'électrode se révèle particulièrement efficace pour capter les particules chargées et non complètement brûlées émises par un feu et notamment par un feu couvant. Lorsque ces particules sont captées par les électrodes, elles s'y déchargent, ce qui crée un courant, mais elles s'y enflamment de nouveau, ce qui crée une émission d'ions secondaires également captés, d'où il résulte une augmentation nette du courant. Cette combustion secondaire est améliorée en constituant, ou en recouvrant, les électrodes de métaux ou d'alliages spéciaux.

Dans certains cas, une particule non chargée, telle qu'une poussière, se dépose sur une électrode. Si un ion vient se placer sur la poussière, il se produit entre cet ion et l'électrode une décharge, qui correspond à une multiplication de charges électriques en avalanche, et on voit apparaître un courant plus important. En outre, cette décharge s'accompagne d'une réaction équivalente à une réaction chimique d'oxydation de la poussière, dont le résultat est une combustion de la poussière, c'est-à-dire le nettoyage de l'électrode.

Il en résulte une amélioration de la sensibilité du capteur et un auto-nettoyage des électrodes : le capteur peut ainsi travailler sous une tension d'alimentation plus faible.

La différence fondamentale par rapport aux capteurs ioniques classiques est que dans le capteur selon l'invention, les ions captés et les ions secondaires, également captés, augmentent le courant dans le capteur. En revanche, les variations de température ambiante, les courants d'air, la présence de particules non chargées, sont sans influence sensible sur le courant dans le capteur, ce qui évite les fausses alarmes.

Si l'on revient au schéma de la figure 1, on peut analyser le fonctionnement du détecteur de la façon simplifiée suivante : en l'absence d'ions le point de mesure 5 est à un potentiel stable ; en présence d'ions captés, le courant dans le capteur augmente et le potentiel de ce point 5 varie.

L'alimentation du capteur peut être continue, alternative redressée, ou impulsionnelle avec des impulsions d'échantillonnage de l'ordre de 10 à 20 ms par seconde, par exemple.

L'invention est particulièrement bien adaptée à la détection des débuts d'incendie, notamment des feux couvants, par son capteur qui capte les petites particules chargées émises au démarrage du feu. Elle est également adaptée à la détection des fumées, des gaz, des vapeurs (de sodium, par exemple), des poussières, des aérosols, ou des ions.

**Revendications**

1. Détecteur électrique de particules du type dans lequel un capteur (1) à deux électrodes est alimenté en tension, et fonctionne en courant en dessous de la zone de décharge couronne, caractérisé en ce que les électrodes (2, 3) sont constituées par des fils repliés en alpha, et en ce que le point de fonctionnement du capteur (1) se situe en dessous de la zone de décharge non entretenue, c'est-à-dire bien en dessous, en intensité, de la zone de l'avalanche auto-entretenue correspondant à la décharge couronne, de telle sorte que la capture d'ions par ledit capteur (1) provoque une augmentation du courant qui le traverse.

2. Détecteur selon la revendication 1, caractérisé en ce que les deux électrodes (2, 3) du capteur (1) sont reliées à l'alimentation par l'intermédiaire de deux résistances, dont l'une (6) est de l'ordre du gigohm, et dont l'autre (4) crée une chute de tension mesurée pour déterminer le courant traversant le capteur.

3. Détecteur selon la revendication 1, caractérisé en ce que le capteur (1) est alimenté par l'intermédiaire d'au moins une diode (17) qui fonctionne en début de caractéristique et se comporte comme une résistance.

4. Détecteur selon la revendication 3, caractérisé en ce que ladite autre résistance (4) a ses deux extrémités reliées à la masse par l'intermédiaire de capacités (18, 19).

5. Détecteur selon la revendication 1, caractérisé en ce que les fils constituant les électrodes en alpha présentent des barbes (21).

## Claims

1. Electric particle detector of the type in which a sensor (1) with two electrodes is supplied with a voltage, and operates at a current below the zone of corona discharge, characterised in that the electrodes (2, 3) are formed by wires bent in an alpha shape, and in that the operating point of the sensor (1) is situated below the non-self-sustaining discharge zone, that is to say at an intensity well below the self-sustaining avalanche zone corresponding to corona discharge, such that the capture of ions by said sensor (1) causes an increase in the current passing therethrough.

2. Detector according to Claim 1, characterised in that the two electrodes (2, 3) of the sensor (1) are connected to the power supply via two resistances, one (6) of which is of the order of a gigaohm, and the other (4) of which provides a measurable voltage drop for determining the current passing through the sensor.

3. Detector according to Claim 1, characterised in that the sensor (1) is supplied via at least one diode (17) which operates at the beginning of its characteristic and behaves like a resistance.

4. Detector according to Claim 3, characterised in that said other resistance (4) has its two ends connected to earth via capacitors (18, 19).

5. Detector according to Claim 1, characterised in that the wires forming the electrodes in an alpha shape have barbs (21).

## Patentansprüche

1. Elektrischer Teilchenfühler, bei welchem ein Meßfühler (1) mit zwei Elektroden an Spannung liegt und in einem Strombereich unterhalb des Bereichs der Koronaentladung arbeitet, dadurch gekennzeichnet, daß die Elektroden (2, 3) durch alphaförmig umgebogene Drähte gebildet sind, und daß der Arbeitspunkt des Meßfühlers (1) unterhalb des Bereichs unselbständiger Entladung liegt, d. h. intenstätsmäßig deutlich unterhalb des Bereichs selbständiger Lawinenbildung, der der Koronaentladung entspricht, so daß das Einfangen von Ionen durch den genannten Meßfühler (1) eine Erhöhung des ihn durchfließenden Stroms hervorruft.

2. Detektor nach Anspruch 1, dadurch gekennzeichnet, daß die beiden Elektroden (2, 3) des Meßfühlers (1) an die Spannungsquelle über zwei Widerstände angeschlossen sind, von denen der eine (6) die Größenordnung eines Gigaohm hat und der andere (4) einen Spannungsabfall hervorruft, der gemessen wird, um den durch den Meßfühler fließenden Strom zu bestimmen.

3. Detektor nach Anspruch 1, dadurch gekennzeichnet, daß der Meßfühler (1) über mindestens eine Diode (17) gespeist wird, die im Kennlinienanfang arbeitet und als Widerstand wirkt.

4. Detektor nach Anspruch 3, dadurch gekennzeichnet, daß der genannte andere Widerstand (4) mit seinen beiden Enden über Kapazitäten (18, 19) an Erde liegt.

5. Detektor nach Anspruch 1, dadurch gekennzeichnet, daß die die alpha-förmigen Elektroden bildenden Drähte Whisker (21) aufweisen.

0 159 244

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

0 159 244

**Fig. 12**

**Fig. 13**

2